# EUROPÄISCHE PATENTSCHRIFT

(11) **EP 0 882 509 B1**
(45) Veröffentlichungstag und Bekanntmachung des Hinweises auf die Patenterteilung: **16.04.2003**
(21) Anmeldenummer: 98108097.1
(22) Anmeldetag: 04.05.1998
(51) Int. Cl.: B03B 1/00, B03D 1/14

(54) **Verfahren und Vorrichtung zur Aufbereitung von Material**
Method and device for treating materials
Procédé et dispositif de traitement de matières

(30) Priorität: 06.06.1997 DE 19723820; 21.03.1998 DE 19812505
(43) Veröffentlichungstag der Anmeldung: 09.12.1998
(73) Patentinhaber: Robert Nyblad GmbH, 26871 Papenburg (DE); ANTON MÜSING GmbH & CO. KG, D-26810 Westoverledingen (DE)
(72) Erfinder: Ehrlich, Carl Josef, 26871 Papenburg (DE)
(74) Vertreter: Herrmann-Trentepohl, Werner, Dipl.-Ing.

(56) Entgegenhaltungen:
- EP-A- 0 513 445
- WO-A-92/09368
- US-A- 4 060 481

## Beschreibung

Die Erfindung betrifft ein Verfahren zur Aufbereitung von Material, welches vorzugsweise miteinander agglomerierte bzw. verklumpte Materialbestandteile umfaßt, insbesondere zur Aufbereitung von Altpapier- oder -pappmaterial.

Weiter betrifft die Erfindung eine Vorrichtung zur Aufbereitung von Material, vorzugsweise zur Durchführung des vorgenannten Verfahrens.

Für die Wiederverwertung von Altmaterialien, insbesondere die Wiederverwendung von Altpapier- oder -pappmaterial, aber auch bei anderen Arten von Recyclingmaterial, insbesondere auch Hausmüll, muß oftmals der gewünschte Wertstoff bzw. müssen die gewünschten Wertstoffe von unerwünschten Fremdstoffen getrennt werden, wobei oftmals die Wertstoffe und die Fremdstoffe in Form von kleinsten verklumpungen miteinander vermengt und miteinander verbunden sind.

So fallen beispielsweise Altpappenmaterialien an, die im wesentlichen aus Papierfaserklumpen bestehen, die unerwünschte Störstoffe enthalten. Bei diesen Störstoffen handelt es sich hauptsächlich um Anteile aus Hausmüll, wie Dosen, Folien, Lumpen etc.

Für die Trennung dieser Stoffe voneinander, kommen Geräte, wie z.B. Mühlen und dergleichen, in Betracht, die die Verklumpungen aufbrechen, so daß die voneinander dadurch getrennten Stoffe ggf. aufgrund ihrer unterschiedlichen Dichte voneinander getrennt werden können. Derartige Trennverfahren sind aber nicht nur sehr aufwendig, sondern führen dazu, daß auch die Stoffanteile selbst weiter zerkleinert werden, so daß die voneinander getrennten Stoffe einem Weiterverarbeitungsprozeß bzw. Wiedergewinnungsprozeß gar nicht mehr zugeführt werden können oder zumindest eine solche Weiterverwendung über ein solchen Trennverfahren ökonomisch nicht sinnvoll ist.

Aber auch in anderen Anwendungsbereichen treten vergleichbare Probleme und Aufgaben auf. Es ist nämlich auch bei anderen Materlallen häufig notwendig, Materialverklumpungen oder miteinander agglomerierte Materialbestandteile voneinander zu lösen, auch dann, wenn es sich im Prinzip um identische Bestandteile handelt. zum Beispiel kann es aus Gründen des Transportes, wegen einer Kostenreduktion, oder aus Gründen einer Zwischenlagerung oder aber auch aus sonstigen verfahrenstechnischen Gründen, z.B. für Reifungsprozesse, notwendig sein, elne Verklumpung von Materialbestandtellen, vorzugsweise In einer breiigen Masse, zu tolerieren oder sogar zu begünstigen, wonach es dann wiederum sachdienlich sein kann, diese Masse in eine Suspension zu überführen, wozu die Materialbestandtelle möglichst vereinzelt werden müssen, also möglichst voneinander getrennt werden müssen. Dabei ist es oft unschädlich, wenn die Materialbestandtelle selbst zum Teil zerstört, zerkleinert, gelöst oder aufgelöst werden. Bei derartigen Materialbestandtellen kann es sich im Einzelfalle auch durchaus um faserige Materialbestandtelle handeln, die sich beispielsweise miteinander verknäulen.

Entsprechende Gegebenheiten können beispielsweise bei der Papierherstellung, der Ausrüstung und Herstellung von Streichpigmenten, von Nahrungsmitteln für Mensch oder Tier, bei Düngemitteln, Kläranlagenmaterialien, Farben und Lacken, textilen Materialien, Massen für die Verwendung Im Bauhandwerk, Erden oder dergleichen auftreten bzw. vorliegen.

Die EP 0 513 445 offenbart ein Verfahren zur Aufbereitung von Material, bei dem das aufzubereitende Material innerhalb einer Flüssigkeit durch Eingabe eines Gases bzw. Gasgemisches aufbereitet wird, um Materialbestandteile voneinander zu lösen, indem das Gas explosionsartig in Form wenigstens einer Druckwelle mit einer Gaskanone in die Flüssigkeit eingeschossen wird. Zur Trennung der Materialbestandteile nach der Ablösung von Kontaminaten werden herkömmliche Verfahren, wie z.B. eine nachgeschaltete Vakuumbandfilteranlage, vorgeschlagen.

Der vorliegenden Erfindung liegt die Aufgabe zugrunde, ein Verfahren bzw. eine Vorrichtung zur Aufspaltung verklumpter Materialbestandteile aufzuzeigen, die in ökonomischer und gleichzeitig effektiver Weise arbeiten und in ein Gesamtverfahren Integriert werden können, und die eine Schnelle, effektive Trennung der gelösten Stoffe voneinander noch im Trennbehälter ermöglicht.

Diese Aufgabe wird erfindungsgemäß In Verfahrenshinsicht dadurch gelöst, daß das aufzubereitende Material Innerhalb einer Flüssigkeit der Aufbereitung unterzogen wird, bei der In die Flüssigkeit unterhalb des Flüssigkeitsspiegels ein Gas bzw. ein Gasgemisch eingegeben wird, um Materialbestandtelle voneinander zu lösen bzw. zu trennen und/oder selbst zu lösen oder aufzulösen.

indem das Gas explosionsartig in Form wenigstens einer (zeitlich begrenzten) Druckwelle mittels einer Gaskanone in die Flüssigkeit eingeschossen wird, die dabei als Energieübertragungsmedium genutzt wird.

Das erfindungsgemäße Verfahren sieht also vor, das aufzubereitende Material in eine Flüssigkeit einzugeben, vorzugsweise in Wasser einzugeben, bzw. eine solche Flüssigkeit dem Material zuzuführen und in besonderer Weise mit Energie zu beaufschlagen. Im Material enthaltene Stoffe oder Bestandteile unterschiedlicher Dichte können nach einer Weiterbildung des Verfahrens durch unterschiedlichen Auftrieb in der Flüssigkeit voneinander getrennt werden, auch wenn das Material bei der Eingabe in die Flüssigkeit noch Verklumpungen enthält, die eine solche Trennung der Stoffe allein aufgrund der Dichteverhältnisse mechanisch verhindert, indem das Gas bzw. Gasgemisch, vorzugsweise Luft, gleichzeitig zum Trennvorgang zur Erzeugung von Flotationseffekten genutzt wird, die den Auftrieb voneinander getrennter Stoffe begünstigen. Die Trennung der Materialbestandteile geschieht erfindungsgemäß, indem das Gas explosionsartig in Form wenigstens einer zeitlich begrenzten Druckwelle in die Flüssigkeit eingeschossen wird, wodurch der Flüssigkeit eine erhebliche Energie zugeführt wird, die durch die Flüssigkeit auf die in ihr enthaltenen Materialklumpen übertragen wird, mit der Wirkung, daß aufgrund der sich ergebenden Vibrationen bzw. des sich ergebenden Druckverlaufes Scherkräfte auf diese Verklumpungen ausgeübt werden, durch die die Materialbestandteile voneinander getrennt werden. Die Verklumpungen werden dabei auseinandergebrochen. Bei dieser Trennung kann dann gleich dasselbe Gas den Auftrieb von abgetrennten Materialbestandteilen begünstigen. Die Trennung kann gegebenenfalls trotz des Energieeintrages schonend für die Materialbestandteile selbst erfolgen. Die Materialbestandteile könnten aber, wenn dies sachgerecht ist, wahlweise auch selbst geteilt bzw. zerteilt werden.

Aus der EP-OS 0 599 088 ist prinzipiell ein Verfahren entnehmbar, bei dem eine Trennung von Stoffen unterschiedlicher Materialien dadurch vorgenommen wird, daß das Material in eine Flüssigkeit eingegeben wird und der Flüssigkeit ein Luftstrom zugeführt wird. Bei diesem bekannten Verfahren ist jedoch der Luftstrom relativ uneffektiv und wird insbesondere nicht genutzt, um evtl. vorhandene Verklumpungen zu lösen. Es handelt sich hierbei also um ein reines Flotationsverfahren ohne eine Aufspaltung von Verklumpungen, die anderweitig vorgenommen werden müßte, ggf. mit den eingangs geschilderten Nachteilen und dem damit verbundenen Aufwand.

Nach ihrer Trennung können beim erfindungsgemäßen Verfahren die Stoffe für die weitere Aufbereitung bzw. im Rahmen der weiteren Aufbereitung in an sich für die Behandlung von Suspensionen bekannter Weise durch Abschöpfen, Abziehen von Bodensätzen, Abfiltern oder dergleichen weiter voneinander separiert und unterschiedlich weitergeleitet werden.

In diesem Zusammenhang sei noch einmal erwähnt, daß das Ausgangsmaterial trocken oder feucht bzw. naß sein kann. Das Material kann, sofern es schwimmt, in einem drucklosen Behälter durch geeignete Vorrichtungen, z.B. Stempel, Siebe oder dergleichen, während des Druckstoßes unterhalb des Flüssigkeitsspiegels gehalten werden, um das Material gezielt der entsprechenden Druckwelle auszusetzen. Der gegebenenfalls verwendete Behälter kann außerdem entsprechende Ausformungen und Auslaßöffnungen haben, damit die schließlich in Suspension befindlichen Materialbestandteile, gegebenenfalls auch Fasern, abgepumpt werden können. Die durch Flotation aufgeschwommenen Materialbestandteile können entweder, je nach Anwendungsfall, zusammen mit der gesamten Suspension abgepumpt werden oder die Schwimmbestandteile können gegebenenfalls auch getrennt mittels Wehren, Spritzrohren oder derglelchen aufgefangen bzw. abgeschöpft werden. Alle absinkenden Materialbestandteile können beispielsweise mittels Schwerteilschleusen aufgefangen und getrennt ausgeschleust werden. Die weitere Bearbeitung und Verarbeitung einzelner Fraktionen kann insbesondere gemeinsam oder getrennt erfolgen. Insbesondere ist es auch möglich, aus verfahrenstechnischen Gründen eine Rückführung oder eine Vorwärtsführung in mehreren Stufen, beispielsweise in Form einer Kaskadenschaltung, vorzusehen.

Die Erfindung sieht außerdem vor, daß das Material mittels des Gasdruckes in einer etwa horizontalen Förderrichtung vorangetrieben werden.

Auf diese vorteilhafte Weise wird also dem eingegebenen Gas gleichzeitig eine dritte Funktion zugewiesen, nämlich eine Förderung der zu trennenden oder schon getrennten Stoffe in effektiver Weise zu bewirken.

Das erfindungsgemäße Verfahren kann diskontinuierlich, chargenweise, aber auch kontinuierlich durchgeführt werden, in dem Sinne, daß laufend aufzubereitendes Material zugeführt und voneinander getrennte. Stoffe abgeführt bzw. weitergefördert werden.

Eine Vorrichtung zur Aufbereitung von Material, vorzugsweise zur Durchführung des erfindungsgemäßen Verfahrens, zeichnet sich erfindungsgemäß aus, durch die Merkmale des Anspruchs 4, und zwar mit den im Zusammenhang mit dem erfindungsgemäßen Verfahren geschilderten vorteilen.

Ein Trennbehälter für die erfindungsgemäße Vorrichtung, der relativ kostengünstig und einfach ausgebildet ist, wäre insbesondere für eine diskontinuierliche Verfahrensdurchführung hinreichend geeignet.

Eine Weiterbildung der erfindungsgemäßen Vorrichtung sieht mit Vorteil zur kontinuierlichen Durchführung des erfindungsgemäßen Verfahrens vor, daß der Trennbehälter aber auch einen Abschnitt eines Förderweges für das aufzubereitende Material bilden kann.

Gemäß der Erfindung ist die Gaskanone so am Trennbehälter angeordnet, dass wenigstens eine Geschwindigkeitskomponente des ausgestoßenen Gases in Förderrichtung gerichtet ist. Dadurch kann mittels des Gasdruckes das Material in Förderrichtung, wenigstens über den vom Trennbehälter gebildeten Förderabschnitt vorangetrieben werden. Dazu muß die Gaskanone nicht parallel zur Förderrichtung gerichtet sein, sondern kann auch schräg dazu in einem Winkel gerichtet sein, so daß sie also nur mit einer Richtungskomponente in Förderrichtung weist.

Eine nächste Weiterbildung der erfindungsgemäßen Vorrichtung sieht vor, daß dem Trennbehälter eine Eingabestation zur Eingabe des aufzubereitenden Materials in den Förderweg entgegen der Förderrichtung vorgeordnet ist Bereits diese Eingabestation ist vorzugsweise selbst mit einer Gaskanone ausgerüstet. Es kann also schon in diesem Bereich eine Vortrennung bzw. auch ein vorantrieb des aufzubereitenden Materials erfolgen. Ohnehin wäre die Durchführung des erfindungsgemäßen Verfahrens und die entsprechende Ausbildung der Vorrichtung mit mehreren Stufen und/oder natürlich in mehreren zeitlich aufeinander folgenden Intervallen möglich. Dabei kann eine bestimmte räumliche und auch zeitliche Zuordnung und Steuerung mehrerer Luftkanonen für eine abgestimmte bzw. konzertierte Gasbeaufschlagung der Flüssigkeit und des aufzubereitenden Materials erfolgen.

Dem Trennbehälter ist vorzugsweise ein Auftriebs- und Absatzbecken bzw. - behälter in Förderrichtung nachgeordnet, in dem im Trennbehälter voneinander getrennte Materialbestandteile entsprechend ihrer Dichte bzw. ihres Auftriebes in relativer Ruhe absinken, aufsteigen oder schweben können. In dieser Bearbeitungsstation könnte dann ggf. auch ein Abschöpfen, Abseien, Filtern oder dergleichen erfolgen.

Die Flüssigkeit selbst könnte, beispielsweise unter zusätzlicher Zuhilfenahme einer Pumpe, in einem Kreislauf umlaufen und ständig wiederverwendet werden. Die verwendete Flüssigkeit und/oder das verwendete Gas kann auf die Eigenschaften des aufzubereitenden Materials abgestimmt werden, insbesondere beispielsweise im Hinblick auf Entzündbarkeit des Materials oder dergleichen.

Die einzelnen Förderabschnitte der Vorrichtung könnten durch Druckschleusen oder dergleichen geeignete Einrichtungen voneinander derart getrennt sein, daß sich die in einem Abschnitt ausgeübte Druckwirkung sich nicht in einen anderen Abschnitt auswirkt, insbesondere jedenfalls nicht in einen Abschnitt, der sich entgegen der Förderrichtung anschließt.

Zusätzlich ist vorzugsweise eine Druckausgleichseinrichtung vorgesehen, die einen Überdruck in dem Bearbeitungsabschnitt bzw. der Gesamtvorrichtung verhindert. Dabei kann insbesondere an ein Steigrohr im Bereich des Trennbehälters gedacht werden.

Ausführungsbeispiele, aus denen sich weitere erfinderische Merkmale ergeben, sind in der Zeichnung dargestellt. Es zeigen schematisch:
- Fig. 1: einen Aufbereitungs- bzw. Trennbehälter für eine diskontinuierliche, chargenweise Durchführung des erfindungsgemäßen Verfahrens,
- Fig. 2: eine Vorrichtung zur kontinuierlichen Durchführung des erfindungsgemäßen Verfahrens und
- Fig. 3: eine Stirnansicht des Trennbehälterabschnittes der Vorrichtung gemäß Fig. 2 in einer Stirnansicht.

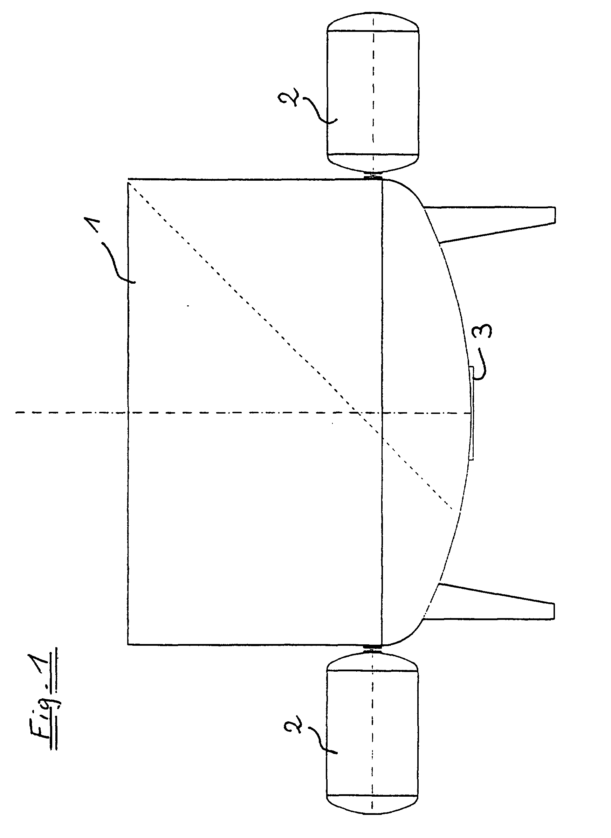

Die Fig. 1 zeigt einen Trennbehälter, der in der dargestellten Form insbesondere für eine diskontinuierliche Durchführung des erfindungsgemäßen Verfahrens geeignet wäre.

In den Trennbehälter 1 wird eine Flüssigkeit eingegeben, die das aufzubereitende Material enthält, bzw. wird in den Behälter das Material hineingegeben und entsprechend Flüssigkeit zugefügt.

An den Trennbehälter 1 sind beidseitig Luftkanonen 2 angeschlossen, die unterhalb des sich ausbildenden Flüssigkeitsspiegels in das Innere des Trennbehälters 1 einmünden. Mit Hilfe dieser Luftkanonen kann jeweils während kurzer Zeitdauern explosionsartig ein Gasgemisch, vorzugsweise Luft, in das Innere des Trennbehälters 1 eingeschossen werden. Hierdurch werden eventuelle Verklumpungen des aufzubereitenden Materials aufgelöst, indem durch Scherkräfte aneinanderhaftende Stoffe voneinander getrennt werden. Gleichzeitig kann das Gas bzw. das Gasgemisch aufgrund von Flotationseffekten die unterschiedliche Höhenverteilung der Stoffe unterschiedlicher Dichte begünstigen bzw. beschleunigen.

die unterschiedliche Höhenverteilung der Stoffe unterschiedlicher Dichte begünstigen bzw. beschleunigen.

Sobald sich eine entsprechende Schichtentrennung eingestellt hat, könnte beispielsweise ein Bodensatz aus dem Trennbehälter 1, beispielsweise sich auf dem Boden abgelagerte Pappfasern, durch eine Abzugsöffnung 3, abgezogen werden.

Auf der Höhe des Flüssigkeitsspiegels könnte beispielsweise eine Art Rechen oder dergleichen angeordnet werden, um auf dem Flüssigkeitsspiegel schwimmendes Material abzuziehen bzw. abzuseien.

Schließlich könnte die dann noch im Trennbehälter 1 befindliche Flüssigkeit gefiltert werden, um beispielsweise Schwebeteilchen herauszufiltern.

Zusätzliche Behandlungen der Flüssigkeit, wie z.B. Zentrifugieren, sind natürlich nicht ausgeschlossen.

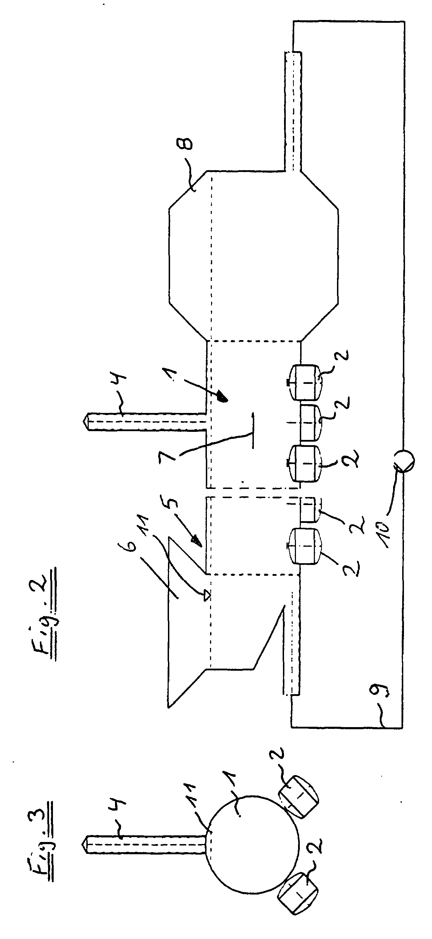

Die Fig. 2 zeigt eine Vorrichtung für das kontinuierliche Betreiben des erfindungsgemäßen Verfahrens.

Auch diese Vorrichtung umfaßt einen Trennbehälter 1 mit Luftkanonen 2.

Während der Trennbehälter 1 gemäß der Fig. 1 beckenartig oder kesselartig oben offen sein könnte, ist der Trennbehälter 1 gemäß Fig. 2 als eine Art Rohrabschnitt nach oben geschlossen ausgebildet und stellt einen Förderwegabschnitt innerhalb der Gesamtvorrichtung dar. Für einen Druckausgleich des durch das jeweilige Einschießen eines Gases in den Trennbehälter 1 kurzzeitig aufgebauten Überdruckes verfügt der Trennbehälter 1 über ein Steigrohr 4.

Dem Trennbehälter 1 ist in der Fig. 2 eine Eingabestation 5 vorgeschaltet. Diese Eingabestation verfügt über eine Trichteröffnung 6, durch die aufzubereitendes Material in die Vorrichtung eingegeben werden kann. Auch der Eingabestation 5 sind bereits Luftkanonen 2 zugeordnet.

Die Eingabestation 5 kann von dem Trennbehälter 1 durch eine Druckschleuse getrennt sein, und zwar vorzugsweise durch eine Druckschleuse, die eine Druckausbreitung von dem Trennbehälter 1 in die Eingabestation, also entgegen der Förderrichtung 7, verhindert, jedoch eine Druckausbreitung von der Eingabestation 5 in den Trennbehälter 1 zuläßt. Auf diese Weise können auch die Luftkanonen 2 bei einer entsprechenden Ausrichtung genutzt werden, um das aufzubereitende Material in Förderrichtung 7 voranzutreiben.

Dem Trennbehälter 1 ist ein Absetz- und Auftriebsbecken 8 nachgeschaltet. Dieses Becken 8 kann von dem Trennbehälter 1 wiederum durch eine Druckschleuse getrennt sein, die sich in Förderrichtung 7 öffnet. Das in dem Trennbehälter 1 mittels der Luftkanonen 2 in seine Stoffe bzw. Bestandteile getrennte Material wird in das Becken 8 gefördert, wo es sich in Ruhe entsprechend seiner Dichteverteilung in unterschiedlichen Höhen der Flüssigkeit lagern bzw. ansiedeln kann. Ein Abziehen dieser einzelnen Schichtenfraktionen wäre dann in diesem Becken 8 bzw. aus diesem Becken 8 in gleicher Weise möglich, wie im Zusammenhang mit der Fig. 1 für den Trennbehälter 1 geschildert.

Bei der Vorrichtung der Fig. 2 werden also die von dem Trennbehälter 1 gemäß Fig. 1 übernommenen Funktionen des Trennens und Absetzens für die kontinuierliche Durchführung des Verfahrens auf den Trennbehälter 1 und das Becken 8 aufteilt.

Mittels einer Leitung 9, in die auch eine Förderpumpe 10 eingesetzt ist, wird bei der Vorrichtung gemäß Fig. 2 der Flüssigkeitskreislauf geschlossen. Die Trägerflüssigkeit kann also umlaufend wiederverwendet werden.

Die Fig. 3 zeigt den Trennbehälter 1 gemäß Fig. 2 in einer Stirnansicht. Gleiche Bauelemente sind mit den gleichen Bezugszahlen bezeichnet, wie in Fig. 2. Erkennbar ist auch in der Fig. 3 - wie in der Fig. 2 - der Flüssigkeitsspiegel 11.

Des weiteren ist in der Fig. 3 erkennbar, daß die Luftkanonen schräg angesetzt sind. Was in der Fig. 3 und auch in der Fig. 2 dagegen nicht erkennbar ist, ist die Tatsache, daß die Luftkanonen 2 oder zumindest deren Mündungen wenigstens mit einer Richtungskomponente in Förderrichtung 7 geneigt sein können, um mit den Gasstößen das aufzubereitende Material zusätzlich in Förderrichtung 7 voranzutreiben, wodurch die Pumpe 10 unterstützt bzw. entlastet würde und eine Trennung des aufzubereitenden Materials in seine Stoffe bzw. Bestandteile begünstigt würde.

## Patentansprüche

1. Verfahren zur Aufbereitung von Material, welches vorzugsweise miteinander agglomerierte bzw. verklumpte Materialbestandteile umfaßt, insbesondere zur Aufbereitung von Altpapier- oder -pappmaterial,
wobei
das aufzubereitende Material Innerhalb einer Flüssigkelt der Aufbereitung unterzogen wird, bei der in die Flüssigkeit unterhalb des Flüssigkeitsspiegels (11) ein Gas bzw. ein Gasgemisch eingegeben wird, um Materialbestandtelle voneinander zu lösen und/oder selbst zu lösen oder aufzulösen, indem das Gas explosionsartig in Form wenigstens einer Druckwelle mittels einer Gaskanone (2) in die Flüssigkelt eingeschossen wird, die dabei als Energieübertragungsmedium genutzt wird **dadurch gekennzeichnet, daß**
das Gas bzw. das Gasgemisch in der selben Flüssigkeit eine unterschiedliche Höhenverteilung von Stoffen unterschiedlicher Dichte durch Flotation zur Trennung dieser Stoffe erzeugt.

2. Verfahren zur Aufbereitung von Material nach Anspruch 1 oder 2 **dadurch gekennzeichnet, daß** das Material bzw. dessen Bestandteile mittels des Gasdruckes in einer etwa horizontalen Förderrichtung (7) vorangetrieben werden.

3. Verfahren nach einem der vorhergehenden Ansprüche, **dadurch gekennzeichnet, daß** das Verfahren kontinuierlich betrieben wird, in dem sinne, daß laufend aufzubereitendes Material zugeführt und voneinander getrennte oder gelöste Materialbestandteile abgeführt bzw. weitergefördert werden.

4. Vorrichtung zur Aufbereitung von Material, welches vorzugsweise miteinander agglomerierte bzw. verklumpte Materialbestandteile unterschiedlicher Dichte umfaßt, insbesondere zur Aufbereitung von Altpapier- oder -papp-material, vorzugsweise zur Durchführung des Verfahrens gemäß der Ansprüche 1 bis 4,
**gekennzeichnet durch**
einen Trennbehälter (1) zur Eingabe des Materials in bzw. mit einer Flüssigkeit, in den wenigstens eine Gaskanone (2) zur stoßartigen Einbringung eines Gases bzw. eines Gasgemisches in die Flüssigkeit unterhalb des Flüssigkeitsspiegels (11) einmündet, wobei die Gaskanone (2) so am Trennbehälter (1) angeordnet ist, dass wenigstens eine Geschwindigkeitskomponente des ansgestoßenen Gases in Förderrichtung (7) gerichtet ist.

5. Vorrichtung nach Anspruch 4, **dadurch gekennzeichnet, daß** der Trennbehälter (1) einen Abschnitt eines Förderweges für das aufzubereitende Material bildet.

6. Vorrichtung nach Anspruch 5, **dadurch gekennzeichnet, daß** dem Trennbehälter (1) eine Eingabestation (5) zur Eingabe des aufzubereitenden Materials In den Förderweg entgegen der Förderrichtung (7) vorgeordnet ist.

7. Vorrichtung nach Anspruch 6, **dadurch gekennzeichnet, daß** auch die Eingabestation (5) mit einer Gaskanone (2) ausgerüstet ist.

8. Vorrichtung nach einem der Ansprüche 5 bis 7, **dadurch gekennzeichnet, daß** dem Trennbehälter (1) ein Auftriebs- und Absetzbecken bzw. -behälter (8) in Förderrichtung (7) nachgeordnet ist, in dem im Trennbehälter (1) voneinander getrennte Stoffe entsprechend ihrer unterschiedlichen Dichte bzw. ihres unterschiedlichen Auftriebes in relativer Ruhe absinken, aufsteigen oder schweben können.

9. Vorrichtung nach einem oder mehreren der Ansprüche 4 bis 8, gekennzelchnet durch eine Druckausgleichseinrichtung, vorzugsweise ein Steigrohr (4) im Bereich des Trennbehälters (1).

## Claims

1. Method for recovering material, which preferably comprises agglomerated or aggregated material constituents, in particular for recovering waste paper or board material, wherein
the material which is to be recovered is subjected to the recovery within a liquid, with a gas or a gas mixture being fed into the liquid below the liquid surface (11) in order to detach material constituents from one another and/or decompose or repulp the latter by injecting the gas explosively by means of a gas gun (2) into the liquid in the form of at least one pressure wave, which is then used as an energy transfer medium,
**characterised in that**
the gas or the gas mixture gives rise, in the same liquid, to a different vertical distribution of substances of different density through flotation in order to separate these substances.

2. Method for recovering material according to Claim 1 or 2, **characterised in that** the material or the constituents thereof is/are advanced in an approximately horizontal conveying direction (7) by means of the gas pressure.

3. Method according to either of the preceding Claims, **characterised in that** the method is carried out continuously in the sense that material which is to be recovered is continuously supplied, and material constituents which are separated from one another or decomposed are carried away or conveyed further.

4. Apparatus for recovering material, which preferably comprises agglomerated or aggregated material constituents of different density, in particular for recovering waste paper or board material, preferably for carrying out the method according to Claims 1 to 4,
**characterised by**
a separating vessel (1) for feeding the material into or with a liquid, into which vessel at least one gas gun (2) leads for intermittently introducing a gas or a gas mixture into the liquid below the liquid surface (11), wherein the gas gun (2) is disposed at the separating vessel (1) such that at least one speed component of the expelled gas is directed in the conveying direction (7).

5. Apparatus according to Claim 4, **characterised in that** the separating vessel (1) forms a portion of a conveying path for the material which is to be recovered.

6. Apparatus according to Claim 5, **characterised in that** a feed station (5) for feeding the material which is to be recovered into the conveying path against the conveying direction (7) is disposed upstream of the separating vessel (1).

7. Apparatus according to Claim 6, **characterised in that** the feed station (5) is also provided with a gas gun (2).

8. Apparatus according to any one of Claims 5 to 7,
**characterised in that** a buoyancy and settling tank or vessel (8) is disposed downstream of the separating vessel (1) in the conveying direction (7), in which tank or vessel substances having been separated from one another in the separating vessel (1) can descend, rise or be suspended relatively calmly, according to their different density or their different buoyancy.

9. Apparatus according to one or more of Claims 4 to 8, **characterised by** a pressure compensating device, preferably a rising pipe (4), in the region of the separating vessel (1).

## Revendications

1. Procédé de préparation de matériau qui comprend de préférence des composants de matériau agglomérés ou compacts, en particulier pour préparer un matériau de papier ou de carton de récupération, le matériau à préparer à l'intérieur d'un liquide étant soumis à la préparation pour laquelle on introduit dans le liquide un gaz ou un mélange gazeux au-dessous du niveau du liquide (11) afin de dissocier les uns des autres les composants de matériau et/ou de dissocier les composants eux-mêmes ou de les décomposer, le gaz étant inclus dans le liquide - qui y est utilisé en tant que moyen de transmission d'énergie - de façon explosive sous forme d'au moins une onde de pression au moyen d'un canon à gaz,
**caractérisé en ce que** le gaz ou le mélange gazeux produit dans le même liquide une répartition en hauteur différente des substances de densités différentes par flottage afin de séparer ces substances.

2. Procédé de préparation de matériau selon la revendication 1 **caractérisé en ce que** le matériau ou ses composants est poussé en avant au moyen de la pression gazeuse dans une direction de transport (7) pratiquement horizontale.

3. Procédé selon l'une des revendications précédentes **caractérisé en ce que** le procédé fonctionne en continu au sens que le matériau à préparer est conduit en permanence et que des composants de matériau séparés ou dissociés les uns des autres sont évacués ou transportés plus loin.

4. Dispositif de préparation de matériau qui comprend de préférence des composants de matériau agglomérés ou compacts de densités différentes, en particulier pour préparer un matériau de papier ou de carton de récupération, de préférence pour exécuter le procédé selon les revendications 1 à 3,
**caractérisé par** un récipient de séparation (1) destiné à introduire le matériau dans ou avec un liquide dans lequel débouche au moins un canon à gaz (2) destiné à injecter par intermittence un gaz ou un mélange gazeux dans le liquide au-dessous du niveau du liquide (11), le canon à gaz (2) étant placé sur le récipient de séparation (1) de telle manière qu'au moins un composant de vitesse du gaz introduit est dirigé en direction de transport (7).

5. Dispositif selon la revendication 4 **caractérisé en ce que** le récipient de séparation (1) forme un segment d'un trajet de transport pour le matériau à préparer.

6. Dispositif selon la revendication 5 **caractérisé en ce qu'**un poste d'introduction (5) destiné à introduire le matériau à préparer est placé en amont du récipient de séparation (1) dans le trajet de transport (7) en sens inverse de la direction de transport (7).

7. Dispositif selon la revendication 6 **caractérisé en ce que** le poste d'introduction (5) est également équipé d'un canon à gaz (2).

8. Dispositif selon l'une des revendications 5 à 7 **caractérisé en ce que** dans le trajet de transport (7) en aval du récipient de séparation (1) est placé(e) une cuve ou un récipient (8) de suspension ou de décantation dans laquelle ou dans lequel des substances séparées les unes des autres peuvent dans un calme relatif descendre, monter ou flotter selon leur différente densité ou leur différente suspension dans le récipient de séparation (1).

9. Dispositif selon une ou plusieurs des revendications 4 à 8 **caractérisé par** une installation de compensation de pression, de préférence une conduite montante (4) dans la zone du récipient de séparation (1).
